# EUROPEAN PATENT SPECIFICATION

(11) **EP 3 859 474 B1**
(45) Date of publication and mention of the grant of the patent: **17.04.2024**
(21) Application number: 20154772.6
(22) Date of filing: 31.01.2020
(51) Int. Cl.: G05D 1/08

(54) **UNMANNED AERIAL VEHICLE CONFIGURED TO BE OPERATED RELATIVE TO A LAND VEHICLE**
UNBEMANNTES LUFTFAHRZEUG, DAS RELATIV ZU EINEM LANDFAHRZEUG BETRIEBEN WIRD
VÉHICULE AÉRIEN SANS PILOTE CONFIGURÉ POUR ÊTRE UTILISÉ PAR RAPPORT À UN VÉHICULE TERRESTRE

(43) Date of publication of application: 04.08.2021
(73) Proprietor: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: NILSSON, Magnus, 448 37 FLODA (SE); JOHANSSON, Jonathan, 417 14 GÖTEBORG (SE)
(74) Representative: Zacco Sweden AB

(56) References cited:
- WO-A1-2007/141795
- WO-A1-2015/039056
- US-A1- 2012 112 008

## Description

### Technical field

The present disclosure relates to operation of an unmanned aerial vehicle configured to be operated relative to a land vehicle using sensors for monitoring the area surrounding the land vehicle e.g. to inform the vehicle occupant about the current traffic situation.

### Background art

The use of unmanned aerial vehicles, also known as drones or UAVs, has become common for e.g. surveillance, and for monitoring of objects from the air. Unmanned aerial vehicles are commonly operated by a drone operator, a person on the ground, via a remote control, but there are also unmanned aerial vehicles that can fly autonomous. Unmanned aerial vehicles are typically operated using plural propeller motors and they are powered by an on-board battery that enables a free maneuver of the unmanned aerial vehicle during a certain time period before the on-board battery of the unmanned aerial vehicle needs to be recharged. There are also unmanned aerial vehicles that are connected to a power source on the ground via a power cable between the unmanned aerial vehicle and the power source on the ground, that limits the maneuver of the unmanned aerial vehicle, but the power cable supplies the unmanned aerial vehicle with power which extends the operation time of the unmanned aerial vehicle since there is no on-board battery that needs to be recharged. Typically unmanned aerial vehicles are powered by electricity and they consume power when the motors are propelling the unmanned aerial vehicle, which keeps the unmanned aerial vehicle flying in the air.

### Summary

One problem with the current solutions of unmanned aerial vehicles is that an unmanned aerial vehicle is constantly in need of electric power for operation, and hence the energy consumption is constant. For land vehicles, it is beneficial to utilize e.g. the camera view from a unmanned aerial vehicle that is flying in the air above a land vehicle e.g. to inform the vehicle occupant about the current traffic situation surrounding the land vehicle. The inventors have realized that an unmanned aerial vehicle is not only useful when the land vehicle is stationary, or almost not moving, e.g. when searching for a free parking spot, or when the land vehicle is stuck in traffic, but also when the land vehicle is travelling with certain speed e.g. on a highway to keep the vehicle occupant constantly informed about the

current traffic situation that is ahead of the vehicle in order to navigate the land vehicle in a smart and energy effective way, and e.g. to avoid situations that are associated with some kind of risk. In such operation the unmanned aerial vehicle needs to be able to operate both when the land vehicle is travelling at a high speed and when the land vehicle is travelling at a low speed or when the land vehicle is stationary. There is also a desire to minimize the power consumption of the unmanned aerial vehicle.

It is an object of the present disclosure to mitigate, alleviate or eliminate one or more of the above-identified deficiencies and disadvantages in the prior art and solve at least the above mentioned problem. According to a first aspect there is provided an unmanned aerial vehicle configured to be operated relative to a land vehicle using a tow wire connecting the unmanned aerial vehicle with the land vehicle, the unmanned aerial vehicle comprises a sensor configured to determine a head-wind speed onto the unmanned aerial vehicle and a processing circuitry connected to the sensor and in a determination by the processing circuitry that the head-wind speed onto the unmanned aerial vehicle is below a first predefined threshold head-wind speed value, it is determined that the operational mode of the unmanned aerial vehicle is to be set to operate in a self-propelled mode, and operate the unmanned aerial vehicle in the self-propelled mode wherein the unmanned aerial vehicle in self-propelled mode is propelled by at least a first engine when the land vehicle is stationary or moving with a speed below a threshold speed, and in a determination by the processing circuitry that the head-wind speed onto the unmanned aerial vehicle is above a second predefined threshold head-wind speed value, it is determined that the operational mode of the unmanned aerial vehicle is to be set to operate in a towed mode, and operate the unmanned aerial vehicle in the towed mode in which the unmanned aerial vehicle is towed by the land vehicle, when the land vehicle is moving with a speed above the threshold speed; , wherein the unmanned aerial vehicle is operated autonomous based on the position of the unmanned aerial vehicle relative to the land vehicle and the unmanned aerial vehicle is operated to continuously be positioned inside of a three dimensional space at a predefined position in relation to the unmanned aerial vehicle for maintaining the position of the unmanned aerial vehicle relative to the land vehicle, and wherein the processing circuitry is further configured to cause the unmanned aerial vehicle to determine, based on an obstacle position information, that the unmanned aerial vehicle and/or the tow wire is on a collision course with a detected obstacle at a predefined distance ahead of the unmanned aerial vehicle with the current position of the unmanned aerial vehicle, and control the unmanned aerial vehicle to maneuver to a different position other than the current position in order to avoid a collision with the detected obstacle.

One advantage with the self-propelled mode and the towed mode is that the unmanned aerial vehicle can be operated both when the land vehicle is moving with a high speed and when the land vehicle is moving with a low speed, or when the land vehicle is stationary e.g. for monitoring the area surrounding the land vehicle.

According to some embodiments, the unmanned aerial vehicle in towed mode is propelled by wind streams caused by towing of the unmanned aerial vehicle using a tow wire connecting the unmanned aerial vehicle with the land vehicle, and wherein the unmanned aerial vehicle in self-propelled mode is propelled by at least a first engine.

One advantage with the self-propelled mode and the towed mode is that the unmanned aerial vehicle lowers the power consumption in towed mode, since there is no need for the at least first engine to be powered in the towed mode when the unmanned aerial vehicle is propelled by wind streams caused by the towing of the unmanned aerial vehicle.

According to some embodiments, a flap, a wing or a rudder is used to keep the unmanned aerial vehicle flying in the air in towed mode.

This enables the unmanned aerial vehicle to optimize the use of the wind streams caused by the towing of the unmanned aerial vehicle to keep the unmanned aerial vehicle flying in the air and to minimize energy consumption of if the at least first engine of the unmanned aerial vehicle.

According to some embodiments, at least a first engine is used to keep the unmanned aerial vehicle flying in the air in self-propelled mode.

One advantage with the at least first engine is that the unmanned aerial vehicle can maintain flying in the air in the self-propelled mode, e.g. when wind streams cannot be used for flying the unmanned aerial vehicle.

According to some embodiments, the unmanned aerial vehicle further comprises a sensor configured to determine a head-wind speed onto the unmanned aerial vehicle, the sensor being connected to the processing circuitry and in a determination that the head-wind speed onto the unmanned aerial vehicle is below a first predefined threshold head-wind speed value, it is determined that the operational mode of the unmanned aerial vehicle is to be set to operate in the self-propelled mode, and in a determination that the head-wind speed onto the unmanned aerial vehicle is above a second predefined threshold head-wind speed value, it is determined that the operational mode of the unmanned aerial vehicle is to be set to operate in the towed mode.

One advantage with the determination of the operation modes dependent on the head-wind speed onto the unmanned aerial vehicle is that the operation of the at least first engine can be optimized since the head-wind speed onto the unmanned aerial vehicle determines if the unmanned aerial vehicle is able to fly without powering the at least first engine, or using a lower power consumption of the at least first engine, or if the at least first engine does not need to be powered at all.

According to some embodiments, the unmanned aerial vehicle further comprises a movable anchor point at the unmanned aerial vehicle arranged to attach a tow wire to the unmanned aerial vehicle, and configured to change the center of a towing force onto the unmanned aerial vehicle caused by the tow wire when attached to the unmanned aerial vehicle via the anchor point, by movement of the movable anchor point.

One advantage with the movable anchor point at the unmanned aerial vehicle is that the towing force onto the unmanned aerial vehicle can be moved in order to change the aerodynamic characteristics for optimizing the use of the wind streams caused by the towing of the unmanned aerial vehicle to keep the unmanned aerial vehicle flying in the air and to minimize energy consumption of if the at least first engine of the unmanned aerial vehicle.

According to some embodiments, the unmanned aerial vehicle further comprises a movable ballast weight arranged inside of the unmanned aerial vehicle configured to change the center of gravity of the unmanned aerial vehicle by movement of the movable ballast weight.

One advantage with the movable ballast weight is that the aerodynamic characteristics of the unmanned aerial vehicle can be changed for optimizing the use of the wind streams caused by the towing of the unmanned aerial vehicle to keep the unmanned aerial vehicle flying in the air and to minimize energy consumption of if the at least first engine of the unmanned aerial vehicle.

According to some embodiments, the processing circuitry is further configured to cause the unmanned aerial vehicle to determine, based on an obstacle position information, that the unmanned aerial vehicle and/or a tow wire is on a collision course with a detected obstacle at a predefined distance ahead of the unmanned aerial vehicle with the current position of the unmanned aerial vehicle, and control the unmanned aerial vehicle to maneuver to a different position other than the current position in order to avoid a collision with the detected obstacle.

The knowledge of obstacle position information enables safe flying of the unmanned aerial vehicle in environments where there are other objects in the area of the unmanned aerial vehicle that are obstacles to the unmanned aerial vehicle, by avoiding collision with the obstacles.

According to some embodiments, the obstacle position information of the detected obstacle is determined by at least any of a camera sensor arranged at the unmanned aerial vehicle and/or a camera sensor operatively connected with the unmanned aerial vehicle, obstacle position information obtained from a memory, a radar sensor arranged at the unmanned aerial vehicle and/or a radar sensor operatively connected with the unmanned aerial vehicle, and a sonar sensor arranged at the unmanned aerial vehicle and/or a sonar sensor operatively connected with the unmanned aerial vehicle. According to some embodiments any of the camera sensor, the radar sensor or the sonar sensor operatively connected with the unmanned aerial vehicle is arranged at the land vehicle, at a second land vehicle or at a static installed object along the road, in wireless connection with the unmanned aerial vehicle.

Different sensors or stored information can hence be used for determining the obstacle position information which enables the position of both static obstacles, such a known road tunnel, and non-static obstacles, such as a branch from a tree, to be determined in order to avoid a collision.

According to some embodiments, the unmanned aerial vehicle is operated autonomous based on the current speed and/or the position of the unmanned aerial vehicle relative to the ground and/or the land vehicle for maintaining a predefined speed and/or for maintaining the position of the unmanned aerial vehicle relative to the ground and/or the land vehicle.

One advantage with the autonomous operation of the unmanned aerial vehicle is that the unmanned aerial vehicle can be configured to e.g. follow the land vehicle.

According to a second aspect there is provided a system for controlling an unmanned aerial vehicle to be operated relative to a land vehicle for locomotion by land, wherein the unmanned aerial vehicle is adapted to collect information about the land vehicle's surroundings and communicate the collected information to the land vehicle, the system comprising a land vehicle, an unmanned aerial vehicle according to any of the first aspect, and a tow wire configured to tow the unmanned aerial vehicle by the land vehicle comprising a first end attached to the unmanned aerial vehicle and a second end attached to the land vehicle.

One advantage with the system for controlling the unmanned aerial vehicle is that the tow wire between the land vehicle and the unmanned aerial vehicle enables the unmanned aerial vehicle to optimize the use of the wind streams caused by the towing of the unmanned aerial vehicle which minimizes the energy consumption of the at least first engine of the unmanned aerial vehicle.

According to a third aspect there is provided a method for operating an unmanned aerial vehicle relative to a land vehicle, the method comprises operating the unmanned aerial vehicle in a self-propelled mode when the land vehicle is stationary or moving with a speed below a threshold speed, or operating the unmanned aerial vehicle in a towed mode, in which the unmanned aerial vehicle is towed by the land vehicle, when the land vehicle is moving with a speed above the threshold speed.

One advantage with the self-propelled mode and the towed mode is that the unmanned aerial vehicle can be operated when the land vehicle is moving with a high speed and when the land vehicle is moving with a low speed, or when the land vehicle is stationary e.g. for monitoring the area surrounding the land vehicle.

According to some embodiments, the method comprises determining, based on an obstacle position information, that the unmanned aerial vehicle and/or a tow wire is on a collision course with a detected obstacle at a predefined distance ahead of the unmanned aerial vehicle with the current position of the unmanned aerial vehicle and controlling the unmanned aerial vehicle to maneuver to a different position other than the current position in order to avoid a collision with the detected obstacle.

The knowledge of obstacle position information enables safe flying of the unmanned aerial vehicle in environments where there are other objects in the area of the unmanned aerial vehicle that are obstacles to the unmanned aerial vehicle, by avoiding collision with the obstacles.

According to some embodiments, the operational mode of the unmanned aerial vehicle is determined based a head-wind speed onto the unmanned aerial vehicle, and in a determination that the head-wind speed onto the unmanned aerial vehicle is below a first predefined threshold head-wind speed value, it is determined that the operational mode of the unmanned aerial vehicle is to be set to operate in the self-propelled mode, and in a determination that the head-wind speed onto the unmanned aerial vehicle is above a second predefined threshold head-wind speed value, it is determined that the operational mode of the unmanned aerial vehicle is to be set to operate in the towed mode.

One advantage with the determination of the operation modes dependent on the head-wind speed onto the unmanned aerial vehicle is that the operation of the at least first engine can be optimized since the head-wind speed onto the unmanned aerial vehicle determines if the unmanned aerial vehicle is able to fly without powering the at least first engine, or using a lower power consumption of the at least first engine, or if the at least first engine does not need to be powered at all.

According to a fourth aspect there is provided a computer program product comprising a non-transitory computer readable medium, having thereon a computer program comprising program instructions, the computer program being loadable into a processing circuitry and configured to cause execution of the method when the computer program is run by the at least one processing circuitry.

Effects and features of the second through fourth aspects are to a large extent analogous to those described above in connection with the first aspect. Embodiments mentioned in relation to the first aspect are largely compatible with the second through fourth aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 discloses an unmanned aerial vehicle and a tow wire connecting the unmanned aerial vehicle with a land vehicle, according to an embodiment of the present disclosure.
Figure 2a discloses the unmanned aerial vehicle in towed mode according to an embodiment of the present disclosure.
Figure 2b discloses the unmanned aerial vehicle in self-propelled mode according to an embodiment of the present disclosure.
Figure 3a-3c discloses the unmanned aerial vehicle and the example positions of the movable anchor point according to some embodiments of the present disclosure.
Figure 4 illustrates a flow chart of the method steps according to the third aspect of the disclosure.
Figure 5 illustrates a computer program product according to the fourth aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

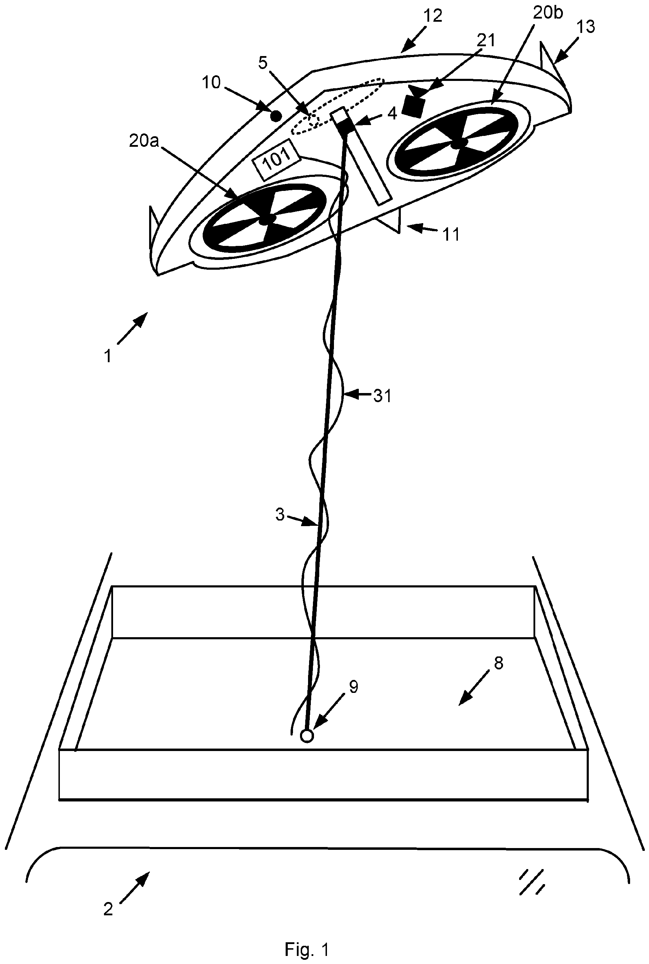

Figure 1 illustrates the unmanned aerial vehicle 1 and the tow wire 3 connecting the unmanned aerial vehicle 1 with the land vehicle 2, according to an embodiment of the present disclosure.

The first aspect of this disclosure shows an unmanned aerial vehicle 1 configured to be operated relative to a land vehicle 2, the unmanned aerial vehicle 1 comprises a processing circuitry 101 configured to operate the unmanned aerial vehicle 1 in a self-propelled mode when the land vehicle 2 is stationary or moving with a speed below a threshold speed, or operate the unmanned aerial vehicle 1 in a towed mode, in which the unmanned aerial vehicle 1 is towed by the land vehicle 2, when the land vehicle 2 is moving with a speed above the threshold speed.

In an example, when the land vehicle 2 is moving with a speed over 60 km/h it is determined that the unmanned aerial vehicle 1 is to be operated in tow mode, while when the land vehicle 2 is moving with a speed below 60 km/h it is determined that the unmanned aerial vehicle 1 is to be operated in self-propelled mode. One advantage with the self-propelled mode and the towed mode is that the unmanned aerial vehicle 1 can be operated both when the land vehicle 2 is moving with a high speed and when the land vehicle is moving with a low speed, or when the land vehicle is stationary e.g. for monitoring the area surrounding the land vehicle.

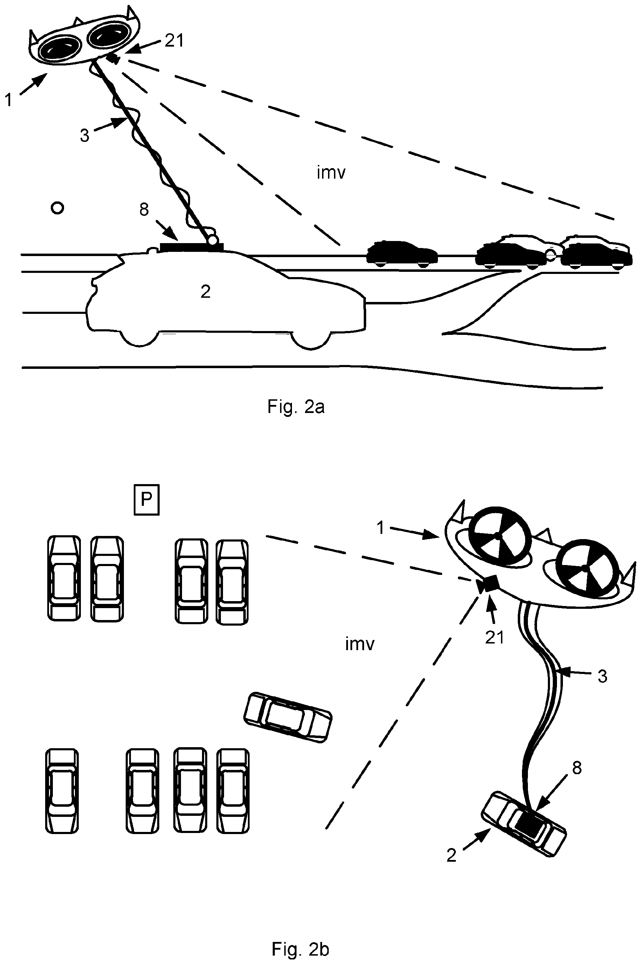

Figure 2a discloses the unmanned aerial vehicle 1 in towed mode according to an embodiment of the present disclosure. In the example as illustrated in Figure 2a the land vehicle 2 is moving in a highway system with a speed above the threshold speed.

Figure 2b discloses the unmanned aerial vehicle 1 in self-propelled mode according to an embodiment of the present disclosure. In the example as illustrated in Figure 2a the land vehicle 2 is moving with a speed below a threshold speed at a parking location searching for a vacant parking.

According to some embodiments, the processing circuitry 101 is further configured to force the unmanned aerial vehicle 1 to be operated in self-propelled mode to control the unmanned aerial vehicle 1 to maneuver to a different position other than the current position. In an example the unmanned aerial vehicle 1 is operated in towed but a different camera view from a higher altitude is desired, and the unmanned aerial vehicle 1 is forced to climb to a higher altitude by using the self-propelled mode to reach the higher altitude.

According to some embodiments the unmanned aerial vehicle 1 is equipped with at least a first camera sensor 21 configured to obtain at least a first image view imv of the surroundings of the land vehicle 2. According to some embodiments the camera sensor 21 is operatively connected to the processing circuitry 101. According to some embodiments the camera sensor 21 obtains an image view of the surroundings of the land vehicle 2 and provides the image view to a vehicle occupant via a display unit inside of the land vehicle 2. Figures 2a and 2b illustrates, by dotted lines, an example image view imv obtained by the camera sensor 21.

In the illustration in Figure 2a, the camera sensor 21 obtains an image view imv of a highway system in order to provide current traffic situation ahead to a driver of the land vehicle 2. In an example use case as illustrated in Figure 2a, the land vehicle 2 was about to use a ramp onto a different road in the highway system but the camera sensor 21 obtained images of a traffic congestion ahead which made the driver of the land vehicle 2 to choose a different route.

In the illustration in Figure 2b, the camera sensor 21 obtains an image view imv of a parking location in order to provide current parking situation to a driver of the land vehicle 2. In an example use case as illustrated in Figure 2a, the camera sensor 21 obtains images of two vacant parking spots that were not visible from the position of the driver in the land vehicle 2, and the driver of the land vehicle could hence continue driving into the parking area and park the land vehicle 2 at one of the vacant parking spots that the driver became aware of thanks to the image view provided by the camera sensor 21.

According to some embodiments the camera sensor 21 is mounted on the outside of the unmanned aerial vehicle 1. According to some embodiments the camera sensor 21 is integrated into the body of the unmanned aerial vehicle 1. According to some embodiments the camera sensor 21 is configured to obtain a first image view imv of the surroundings of the land vehicle 2 and a second image view of the surroundings of the land vehicle 2 that is different from the first image view imv. According to some embodiments the image view is a wide angle view of the surroundings of the land vehicle 2 provided by a wide angle lens of the the camera sensor 21. According to some embodiments the image view is a telephoto view of the surroundings of the land vehicle 2 provided by a telephoto lens of the camera sensor 21. According to some embodiments the unmanned aerial vehicle 1 is equipped with plural camera sensors for providing both a wide angle view and a telephoto view of the surroundings of the land vehicle 2. According to some embodiments a first camera sensor and a second camera sensor are configured to obtain at least a first view and a second view that are overlapping. According to some embodiments the camera sensor 21 is a 360 degree angle camera sensor.

According so some embodiments the processing circuitry 101 of the unmanned aerial vehicle 1 is operatively connected to a land vehicle processing circuitry of the land vehicle 2 via a communication network. According to some embodiments the unmanned aerial vehicle 1 further comprises a memory configured to store data. According to some embodiments the memory is operatively connected to a land vehicle memory of the land vehicle 2 via a communication network.

According to some embodiments the communication network is a wired communication network, illustrated by the power and data cable 31 in Figure 1. According to some embodiments the communication network is a wireless communication network. According to some embodiments the wireless communication network is a standardized wireless local area network such as a Wireless Local Area Network, WLAN, Bluetooth^{™}, ZigBee, Ultra-Wideband, Radio Frequency Identification, RFID, or similar network. According to some embodiments the wireless communication network is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. According to some embodiments the wireless communication network can also be a combination of both a wireless local area network and a wireless wide area network. According to some embodiments communication network can be a combination a wired communication network and a wireless communication network. According to some embodiments the communication network is defined by common Internet Protocols.

According to some embodiments, the speed of the land vehicle 2 is determined by a speedometer of the land vehicle 2 and communicated to the processing circuitry 101 of the unmanned aerial vehicle 1 via the communication network. According to some embodiments, the speed of the land vehicle 2 is determined by a speedometer of the unmanned aerial vehicle 1 when the unmanned aerial vehicle 1 is towed by the land vehicle 2. According to some embodiments speed data determined by the speedometer is obtained by the processing circuitry 101. According to some embodiments the processing circuitry is 101 is configured to determine if the land vehicle 2 is moving with a speed below a threshold speed or moving with a speed above the threshold speed using the obtained speed data from the speedometer.

In the example as illustrated in Figure 1, the land vehicle 2 is equipped with a docking site 8 configured to accommodate the unmanned aerial vehicle 1 on top of the land vehicle 2 when the unmanned aerial vehicle 1 is not in operation. According to some embodiments, the docking site 8 is further configured with an aerodynamic cover element that covers the unmanned aerial vehicle 1 when the unmanned aerial vehicle 1 is resting at the docking site 8 to minimize the air resistance for the land vehicle 2. In the illustration in Figure 1, a tow wire 3 is connecting the unmanned aerial vehicle 1 with the land vehicle 2.

Figures 2a and 2b are also illustrating the land vehicle 2 with the docking site 8 on top of the land vehicle 2.

According to some embodiments, the unmanned aerial vehicle 1 in towed mode is propelled by wind streams caused by the towing of the unmanned aerial vehicle 1 using the tow wire 3 connecting the unmanned aerial vehicle 1 with the land vehicle 2, and wherein the unmanned aerial vehicle 1 in self-propelled mode is propelled by at least a first engine 20a,20b.

In the example as illustrated in Figure 1, the unmanned aerial vehicle 1 is equipped with two propeller engines 20a, 20b. According to some embodiments the unmanned aerial vehicle 1 is equipped with plural engines. According to some embodiments the at least a first engine 20a,20b is configured to propel the unmanned aerial vehicle 1 in different directions and to control hover of the unmanned aerial vehicle 1 in self-propelled mode. According to some embodiments the at least a first engine 20a,20b is at least a first propeller engine that is configured to be directed in different directions. In as example use case as illustrated in Figure 2b, the land vehicle 2 is moving with a speed below a threshold speed at a parking location searching for a vacant parking, and the two propeller engines 20a, 20b are tilted forward to cause a forward movement of the unmanned aerial vehicle 1.

According to some embodiments the at least first engine 20a, 20b is operatively connected to the processing circuitry 101. According to some embodiments the operation of the at least a first engine 20a,20b is controlled by the processing circuitry 101.

According to some embodiments the unmanned aerial vehicle 1 is equipped with an on-board battery for providing electricity to the at least first engine 20a,20b. According to some embodiments the unmanned aerial vehicle 1 is not equipped with an on-board battery and the electrical power is instead fed to the unmanned aerial vehicle 1 via the power and data cable 31, illustrated in Figure 1, from a battery of the land vehicle 2, for providing electricity to the at least first engine 20a,20b of the unmanned aerial vehicle 1. One advantage with providing electricity to the at least first engine 20a,20b via the power and data cable 31 is that the unmanned aerial vehicle 1 becomes lighter and can be made smaller. A further advantage is that the battery of the land vehicle 2 can be bigger and provide with more energy to the unmanned aerial vehicle 1 which extends the operation time of the unmanned aerial vehicle 1.

According to some embodiments the tow wire 3 is connected to the land vehicle 2 via an anchor point 9 arranged at the vehicle 2 as illustrated in Figure 1. According to some embodiments the anchor point 9 at the vehicle is arranged at the docking site 8 that is mounted onto the land vehicle 2. According to some embodiments the tow wire 3 is configured to have an adjustable length between the unmanned aerial vehicle 1 and the land vehicle 2. According to some embodiments the length of the tow wire 3 is adjusted by a winch or hauling device arranged at the land vehicle 2 or at the unmanned aerial vehicle 1. According to some embodiments the winch or hauling device is operatively connected to the processing circuitry 101 of the unmanned aerial vehicle 1 via the communication network.

In an example use case, the unmanned aerial vehicle 1 is resting at the docking site 8 on top of the land vehicle when a driver starts the land vehicle 2. The unmanned aerial vehicle 1 is determined to be in the self-propelled mode, and the engines 20a,20b lifts the unmanned aerial vehicle 1. The winch or hauling device adjusts the length of the tow wire 3 so that the unmanned aerial vehicle 1 can fly above the land vehicle 2. After a while the speed of the land vehicle 2 is increased when the land vehicle is entering a highway. It is then determined that the unmanned aerial vehicle 1 is to be operated in towed mode. The winch or hauling device adjusts the length of the tow wire 3 so that the unmanned aerial vehicle 1 can fly above the land vehicle 2 at maximum height. Later the land vehicle 2 is getting into a city. The unmanned aerial vehicle 1 goes from towed mode to self-propelled mode due to that the speed of the land vehicle 2 is decreasing. At some point and the driver of the land vehicle 2 decides to haul in the unmanned aerial vehicle 1. The winch or hauling device arranged at the land vehicle 2 hauls in the unmanned aerial vehicle 1 so that the unmanned aerial vehicle 1 comes to a rest position at the docking site 8.

According to some embodiments the power and data cable 31 is flexibly arranged at or around the tow wire 3. According to some embodiments the power and data cable 31 is braided around the tow wire 3. According to some embodiments the winch or hauling device is configured to collect both the tow wire and the power and data cable 31 when adjusting the length of the tow wire 3. According to some embodiments the winch or hauling device is configured to completely collect the tow wire and the power and data cable 31 when the unmanned aerial vehicle 1 is not in operation and is resting at the docking site 8.

One advantage with the self-propelled mode and the towed mode is that the unmanned aerial vehicle lowers the power consumption in towed mode, since there is no , or limited need, for the at least first engine to be powered in the towed mode when the unmanned aerial vehicle is propelled by wind streams caused by the towing of the unmanned aerial vehicle.

According to some embodiments a flap 11, a wing 12 or a rudder 13 is used to keep the unmanned aerial vehicle 1 flying in the air in towed mode. According to some embodiments the unmanned aerial vehicle 1 is further equipped with a gyro sensor and/or an accelerometer sensor operatively connected to the processing circuitry 101 to support operation of the unmanned aerial vehicle 1.

In the example as illustrated in Figure 1, the unmanned aerial vehicle 1 is equipped with a flap 11, a wing 12 and a rudder 13. According to some embodiments the unmanned aerial flap 11, wing 12 and rudder 13 are configured to maneuver the unmanned aerial vehicle 1 in different directions in towed mode. According to some embodiments at least any of a flap actuator, a wing actuator or a rudder actuator is electro-mechanically connected to the flap 11, the wing 12 or the rudder 13 respectively to cause a movement of any of the flap 11, wing 12 or rudder 13. According to some embodiments at least any of the flap actuator, the wing actuator or the rudder actuator is operatively connected to the processing circuitry 101. According to some embodiments the operation of the at least any of the flap actuator, the wing actuator or the rudder actuator is controlled by the processing circuitry 101 to change orientation of any of the flap 11, the wing 12 or the rudder 13 respectively to keep the unmanned aerial vehicle flying in the air in towed mode.

This enables the unmanned aerial vehicle to optimize the use of the wind streams caused by the towing of the unmanned aerial vehicle to keep the unmanned aerial vehicle flying in the air and to minimize energy consumption of if the at least first engine of the unmanned aerial vehicle.

According to some embodiments at least a first engine 20a,20b is used to keep the unmanned aerial vehicle 1 flying in the air in self-propelled mode.

One advantage with the at least first engine 20a, 20b is that the unmanned aerial vehicle 1 can maintain flying in the air in the self-propelled mode, e.g. when wind streams cannot be used for flying the unmanned aerial vehicle.

According to some embodiments the unmanned aerial vehicle 1 further comprises a sensor 10 configured to determine a head-wind speed onto the unmanned aerial vehicle 1, the sensor 10 being connected to the processing circuitry 101 and in a determination that the head-wind speed onto the unmanned aerial vehicle 1 is below a first predefined threshold head-wind speed value, it is determined that the operational mode of the unmanned aerial vehicle 1 is to be set to operate in the self-propelled mode; and in a determination that the head-wind speed onto the unmanned aerial vehicle 1 is above a second predefined threshold head-wind speed value, it is determined that the operational mode of the unmanned aerial vehicle 1 is to be set to operate in the towed mode. Figure 1 illustrates an example placement of the sensor 10 in the front of the unmanned aerial vehicle 1.

According to some embodiments the operation mode of the unmanned aerial vehicle 1 is determined based on the head-wind speed onto the unmanned aerial vehicle 1 independent on the determination based on the speed of the land vehicle 2.

In an example, the land vehicle 2 is stationary, but the wind caused by a windy weather is strong enough to maintain the unmanned aerial vehicle 1 flying in the air in towed mode. In another example, the land vehicle 2 is moving with a speed above the threshold speed but the head-wind speed onto the unmanned aerial vehicle 1 is below a first predefined threshold head-wind speed value due to a heavy tailwind.

One advantage with the determination of the operation modes dependent on the head-wind speed onto the unmanned aerial vehicle is that the operation of the at least first engine can be optimized since the head-wind speed onto the unmanned aerial vehicle determines if the unmanned aerial vehicle is able to fly without powering the at least first engine 20a, 20b, or using a lower power consumption of the at least first engine 20a, 20b, or if the at least first engine 20a,20b does not need to be powered at all.

According to some embodiments the circuitry 101 configured to operate the unmanned aerial vehicle 1 in a self-propelled mode at any time. In an example too heavy wind or irregular wind speed and/or wind directions may cause operation in towed mode to be too unstable and a need for the unmanned aerial vehicle 1 to be operated in self-propelled mode.

According to some embodiments the unmanned aerial vehicle 1 further comprises a movable anchor point 4 at the unmanned aerial vehicle 1 arranged to attach a tow wire 3 to the unmanned aerial vehicle 1, and configured to change the center of a towing force onto the unmanned aerial vehicle 1 caused by the tow wire 3 when attached to the unmanned aerial vehicle 1 via the anchor point 4, by movement of the movable anchor point 4.

According to some embodiments the movable anchor point 4 is arranged to be movable along a predefined path having a first end and a second end. The illustration in Figure 1 illustrates the predefined path from below. According to some embodiments the movable anchor point 4 is movable in a plurality of directions.

According to some embodiments the movement of the movable anchor point 4 is caused by an electro mechanical anchor point mover member. According to some embodiments the electro mechanical anchor point mover member is operatively connected to the processing circuitry 101. According to some embodiments operation of the electro mechanical anchor point mover member is controlled the processing circuitry 101.

According to some embodiments the electro mechanical anchor point mover member comprising an electric motor configured to move the movable anchor point 4.

According to some embodiments the processing circuitry 101 of the unmanned aerial vehicle 1 is configured to cause movement of the movable anchor point 4 when the unmanned aerial vehicle 1 is operated in the towed mode.

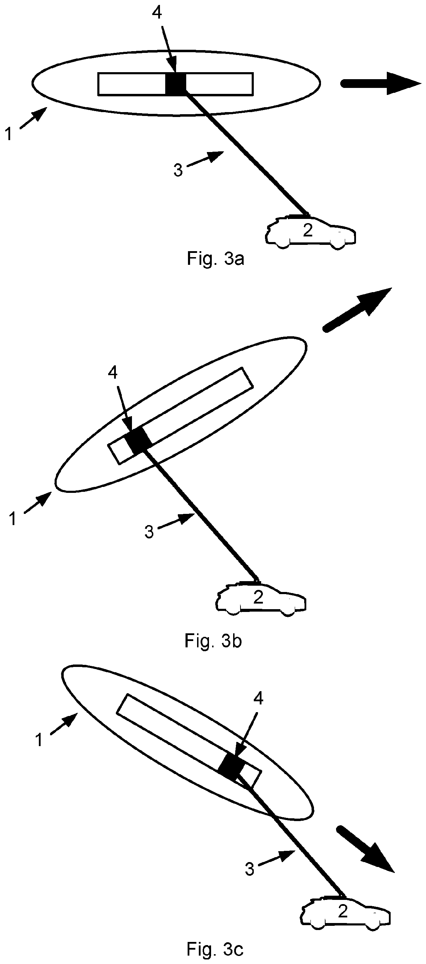

Figures 3a-3c illustrates movement of the movable anchor point 4 as seen from the side of the unmanned aerial vehicle 1 to illustrate the aero dynamical effect on the unmanned aerial vehicle 1 caused by the movement of the movable anchor point 4. The movement of the movable anchor point 4 causes a change of the center of the towing force onto the unmanned aerial vehicle 1 caused by the tow wire 3 when attached to the unmanned aerial vehicle 1 via the movable anchor point 4.

In figure 3a, the movable anchor point is at the center of gravity of the unmanned aerial vehicle 1 and the unmanned aerial vehicle 1 is flying in a stable path parallel to the ground.

In figure 3b, the movable anchor point is moved backward from the center of gravity of the unmanned aerial vehicle 1, which causes the unmanned aerial vehicle 1 to ascend.

In figure 3c, the movable anchor point is moved forward from the center of gravity of the unmanned aerial vehicle 1, which causes the unmanned aerial vehicle 1 to descend.

According to some embodiments the movable anchor point 4 is used for changing the flying altitude of the unmanned aerial vehicle 1.

One advantage with the movable anchor point 4 at the unmanned aerial vehicle 1 is that the towing force onto the unmanned aerial vehicle 1 can be moved in order to change the aerodynamic characteristics of the unmanned aerial vehicle 1 for optimizing the use of the wind streams caused by the towing of the unmanned aerial vehicle 1 to keep the unmanned aerial vehicle 1 flying in the air and to minimize energy consumption of if the at least first engine 20a, 20b of the unmanned aerial vehicle. Another advantage with the movable anchor point 4 at the unmanned aerial vehicle 1 is that the aerodynamic characteristics of the unmanned aerial vehicle 1 can be changed without or with reduced use of a rudder on the outside of the body of the unmanned aerial vehicle 1 that is more fragile, compare to the movable anchor point 4.

According to some embodiments the unmanned aerial vehicle 1 further comprises a movable ballast weight 5 arranged inside of the unmanned aerial vehicle 1 configured to change the center of gravity of the unmanned aerial vehicle 1 by movement of the movable ballast weight 5.

According to some embodiments the movable ballast weight 5 is arranged to be movable along a predefined path having a first end and a second end. The illustration in Figure 1 illustrates the predefined path inside of the unmanned aerial vehicle 1 with dotted lines. In the illustration in Figure 1 the movable ballast weight 5 is illustrated as a circular weight. According to some aspects the movable ballast weight 5 is a liquid. According to some embodiments the movable ballast weight 5 is movable in a plurality of directions. According to some embodiments the movable ballast weight 5 is a liquid that can be pumped to different cavities configured to contain the liquid.

According to some embodiments the movement of movable ballast weight 5 is caused by an electro mechanical ballast weight mover member. According to some embodiments the electro mechanical ballast weight mover member is operatively connected to the processing circuitry 101. According to some embodiments operation of the electro mechanical ballast weight mover member is controlled the processing circuitry 101.

According to some embodiments the electro mechanical ballast weight mover member comprising any of a microelectromechanical switch, a pump or an electric motor to move the ballast weight.

According to some embodiments the processing circuitry 101 of the unmanned aerial vehicle 1 is configured to cause movement of the movable ballast weight 5 when the unmanned aerial vehicle 1 is operated in the towed mode.

One advantage with the movable ballast weight 5 is that the aerodynamic characteristics of the unmanned aerial vehicle 1 can be changed for optimizing the use of the wind streams caused by the towing of the unmanned aerial vehicle 1 to keep the unmanned aerial vehicle 1 flying in the air and to minimize energy consumption of if the at least first engine 20a, 20b of the unmanned aerial vehicle 1. Another advantage with the movable ballast weight 5 is that the aerodynamic characteristics of the unmanned aerial vehicle 1 can be changed without or with reduced use of a rudder on the outside of the body of the unmanned aerial vehicle 1 that is more fragile, compare to the movable ballast weight 5 inside of the unmanned aerial vehicle 1.

According to some embodiments the processing circuitry 101 is further configured to cause the unmanned aerial vehicle 1 to determine, based on an obstacle position information, that the unmanned aerial vehicle 1 and/or a tow wire 3 is on a collision course with a detected obstacle at a predefined distance ahead of the unmanned aerial vehicle 1 with the current position of the unmanned aerial vehicle 1, and control the unmanned aerial vehicle 1 to maneuver to a different position other than the current position in order to avoid a collision with the detected obstacle. According to some embodiments the predefined distance ahead of the unmanned aerial vehicle 1 is dependent on the speed and maneuvering ability of the unmanned aerial vehicle 1.

The knowledge of obstacle position information enables safe flying of the unmanned aerial vehicle in environments where there are other objects in the area of the unmanned aerial vehicle that are obstacles to the unmanned aerial vehicle, by avoiding collision with the obstacles.

According to some embodiments the obstacle position information of the detected obstacle is determined by at least any of a camera sensor 21 arranged at the unmanned aerial vehicle 1 and/or a camera sensor operatively connected with the unmanned aerial vehicle 1, obstacle position information obtained from a memory, a radar sensor arranged at the unmanned aerial vehicle 1 and/or a radar sensor operatively connected with the unmanned aerial vehicle 1 and a sonar sensor arranged at the unmanned aerial vehicle 1 and/or a sonar sensor operatively connected with the unmanned aerial vehicle 1. According to some embodiments any of the camera sensor, the radar sensor or the sonar sensor operatively connected with the unmanned aerial vehicle is arranged at the land vehicle 2, at a second land vehicle or at a static installed object along the road, in wireless connection with the unmanned aerial vehicle 1. According to some embodiments, the obstacle position information of the detected obstacle is determined using a combination of different sensors of any of the land vehicle 2, the second vehicle and the unmanned aerial vehicle 1.

According to some embodiments the obstacle position information is obtained from a memory, wherein the memory is operatively connected with the processing circuitry 101 of the unmanned aerial vehicle 1. According to some embodiments the memory is operatively connected to a land vehicle memory of the land vehicle 2, or to a remote memory of a remote server, via the communication network. In an example the obstacle position information stored in the memory is associated with details about an obstacle object at a certain geographical position, such as a height of bridge at a certain geographical position along a road. Such obstacle position information is for example stored in a remote server accessible via the communication network.

In an example, a tree has a branch that is above the road where the land vehicle is going. The camera sensor 21 detects the branch of the tree and provides the processing circuitry 101 with obstacle position information of the detected branch. The unmanned aerial vehicle 1 is controlled by the processing circuitry 101 to maneuver to a different position other than the current position in order to avoid a collision with the detected branch.

Different sensors or stored information can hence be used for determining the obstacle position information which enables the position of both static obstacles, such a known road tunnel, and non-static obstacles, such as a branch from a tree, to be determined in order to avoid a collision.

According to some embodiments the unmanned aerial vehicle 1 is operated autonomous based on the current speed and/or the position of the unmanned aerial vehicle 1 relative to the ground and/or the land vehicle 2 for maintaining a predefined speed and/or for maintaining the position of the unmanned aerial vehicle 1 relative to the ground and/or the land vehicle 2. According to some embodiments the unmanned aerial vehicle 1 is operated to continuously be positioned inside of a three dimensional space at a predefined position in relation to the unmanned aerial vehicle 1, e.g. in a sphere with a radius of 5 meters having a center that is 10 m behind the land vehicle 2 at an altitude of 50 meters above the land vehicle 2.

One advantage with the autonomous operation of the unmanned aerial vehicle is that the unmanned aerial vehicle is following the land vehicle.

The second aspect of this disclosure shows a system for controlling an unmanned aerial vehicle the first aspect to be operated relative to a land vehicle 2 for locomotion by land, wherein the unmanned aerial vehicle 1 is adapted to collect information about the land vehicle's surroundings and communicate the collected information to the land vehicle 2, the system comprising; a land vehicle 2; an unmanned aerial vehicle 1 according to any of the first aspect; and a tow wire 3 configured to tow the unmanned aerial vehicle 1 by the land vehicle 2 comprising a first end attached to the unmanned aerial vehicle 1 and a second end attached to the land vehicle 2.

According to some embodiments the camera sensor 21 is used for collecting information about the land vehicle's surroundings.

One advantage the system for controlling the unmanned aerial vehicle is that the tow wire between the land vehicle and the unmanned aerial vehicle enables the unmanned aerial vehicle to optimize the use of the wind streams caused by the towing of the unmanned aerial vehicle which minimizes the energy consumption of if the at least first engine of the unmanned aerial vehicle.

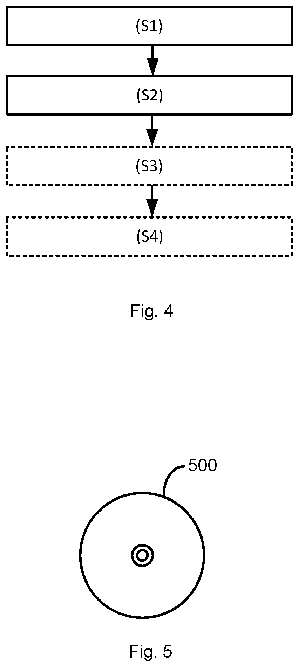

The third aspect of this disclosure shows a method for operating an unmanned aerial vehicle 1 relative to a land vehicle 2. Figure 4 illustrates a flow chart of the method steps according to the third aspect of the disclosure. The method comprises S1 operating the unmanned aerial vehicle 1 in a self-propelled mode when the land vehicle 2 is stationary or moving with a speed below a threshold speed, or S2 operating the unmanned aerial vehicle 1 in a towed mode, in which the unmanned aerial vehicle 1 is towed by the land vehicle 2, when the land vehicle 2 is moving with a speed above the threshold speed.

One advantage with the self-propelled mode and the towed mode is that the unmanned aerial vehicle can be operated when the land vehicle is moving with a high speed and when the land vehicle is moving with a low speed, or when the land vehicle is stationary e.g. for monitoring the area surrounding the land vehicle.

According to some embodiments the method comprises S3 determining, based on an obstacle position information, that the unmanned aerial vehicle 1 and/or a tow wire 3 is on a collision course with a detected obstacle at a predefined distance ahead of the unmanned aerial vehicle 1 with the current position of the unmanned aerial vehicle 1; and S4 controlling the unmanned aerial vehicle 1 to maneuver to a different position other than the current position in order to avoid a collision with the detected obstacle.

The knowledge of obstacle position information enables safe flying of the unmanned aerial vehicle in environments where there are other objects in the area of the unmanned aerial vehicle that are obstacles to the unmanned aerial vehicle, by avoiding collision with the obstacles.

According to some embodiments the operational mode of the unmanned aerial vehicle 1 is determined based a head-wind speed onto the unmanned aerial vehicle 1, and in a determination that the head-wind speed onto the unmanned aerial vehicle 1 is below a first predefined threshold head-wind speed value, it is determined that the operational mode of the unmanned aerial vehicle 1 is to be set to operate in the self-propelled mode; and in a determination that the head-wind speed onto the unmanned aerial vehicle 1 is above a second predefined threshold head-wind speed value, it is determined that the operational mode of the unmanned aerial vehicle 1 is to be set to operate in the towed mode.

One advantage with the determination of the operation modes dependent on the head-wind speed onto the unmanned aerial vehicle 1 is that the operation of the at least first engine 20a, 20b can be optimized since the head-wind speed onto the unmanned aerial vehicle 1 determines if the unmanned aerial vehicle 1 is able to fly without powering the at least first engine 20a, 20b, or using a lower power consumption of the at least first engine 20a, 20b, or if the at least first engine 20a, 20b does not need to be powered at all.

The fourth aspect of this disclosure shows a computer program product comprising a non-transitory computer readable medium, having thereon a computer program comprising program instructions, the computer program being loadable into a processing circuitry 101 and configured to cause execution of the method when the computer program is run by the at least one processing circuitry 101. Figure 5 illustrates the computer program product according to the fourth aspect of the disclosure.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. An unmanned aerial vehicle (1) configured to be operated relative to a land vehicle (2) using a tow wire (3) connecting the unmanned aerial vehicle (1) with the land vehicle (2), the unmanned aerial vehicle (1) comprises:
• a sensor (10) configured to determine a head-wind speed onto the unmanned aerial vehicle (1); and
• a processing circuitry (101) connected to the sensor (10) and:
- in a determination by the processing circuitry (101) that the head-wind speed onto the unmanned aerial vehicle (1) is below a first predefined threshold head-wind speed value, it is determined that the operational mode of the unmanned aerial vehicle (1) is to be set to operate in a self-propelled mode, and operate the unmanned aerial vehicle (1) in the self-propelled mode wherein the unmanned aerial vehicle (1) in self-propelled mode is propelled by at least a first engine (20a,20b) when the land vehicle (2) is stationary or moving with a speed below a threshold speed;
- in a determination by the processing circuitry (101) that the head-wind speed onto the unmanned aerial vehicle (1) is above a second predefined threshold head-wind speed value, it is determined that the operational mode of the unmanned aerial vehicle (1) is to be set to operate in a towed mode, and operate the unmanned aerial vehicle (1) in the towed mode in which the unmanned aerial vehicle (1) is towed by the land vehicle (2), when the land vehicle (2) is moving with a speed above the threshold speed;
wherein the unmanned aerial vehicle (1) is operated autonomous based on the position of the unmanned aerial vehicle (1) relative to the land vehicle (2) and the unmanned aerial vehicle (1) is operated to continuously be positioned inside of a three dimensional space at a predefined position in relation to the unmanned aerial vehicle 1 for maintaining the position of the unmanned aerial vehicle (1) relative to the land vehicle (2), and wherein the processing circuitry (101) is further configured to cause the unmanned aerial vehicle (1) to:
- determine, based on an obstacle position information, that the unmanned aerial vehicle (1) and/or the tow wire (3) is on a collision course with a detected obstacle at a predefined distance ahead of the unmanned aerial vehicle (1) with the current position of the unmanned aerial vehicle (1); and
- control the unmanned aerial vehicle (1) to maneuver to a different position other than the current position in order to avoid a collision with the detected obstacle.

2. The unmanned aerial vehicle (1) according to claim 1, wherein the unmanned aerial vehicle (1) in towed mode is propelled by wind streams caused by the towing of the unmanned aerial vehicle (1) using a tow wire (3) connecting the unmanned aerial vehicle (1) with the land vehicle (2), and wherein the unmanned aerial vehicle (1) in self-propelled mode is propelled by at least a first engine (20a,20b).

3. The unmanned aerial vehicle (1) according to any of the preceding claims, wherein a flap (11), a wing (12) or a rudder (13) is used to keep the unmanned aerial vehicle (1) flying in the air in towed mode.

4. The unmanned aerial vehicle (1) according to any of the preceding claims, wherein at least a first engine (20a,20b) is used to keep the unmanned aerial vehicle (1) flying in the air in self-propelled mode.

5. The unmanned aerial vehicle (1) according to any of the preceding claims, wherein the unmanned aerial vehicle (1) further comprises a movable anchor point (4) at the unmanned aerial vehicle (1) arranged to attach a tow wire (3) to the unmanned aerial vehicle (1), and configured to change the center of a towing force onto the unmanned aerial vehicle (1) caused by the tow wire (3) when attached to the unmanned aerial vehicle (1) via the anchor point (4), by movement of the movable anchor point (4).

6. The unmanned aerial vehicle (1) according to any of the preceding claims, wherein the unmanned aerial vehicle (1) further comprises a movable ballast weight (5) arranged inside of the unmanned aerial vehicle (1) configured to change the center of gravity of the unmanned aerial vehicle (1) by movement of the movable ballast weight (5).

7. The unmanned aerial vehicle (1) according to claim 1, wherein the obstacle position information of the detected obstacle is determined by at least any of: a camera sensor (21) arranged at the unmanned aerial vehicle (1) and/or a camera sensor operatively connected with the unmanned aerial vehicle (1); obstacle position information obtained from a memory; a radar sensor arranged at the unmanned aerial vehicle (1) and/or a radar sensor operatively connected with the unmanned aerial vehicle (1); and a sonar sensor arranged at the unmanned aerial vehicle (1) and/or a sonar sensor operatively connected with the unmanned aerial vehicle (1).

8. A system for controlling an unmanned aerial vehicle (1) to be operated relative to a land vehicle (2) for locomotion by land, wherein the unmanned aerial vehicle (1) is adapted to collect information about the land vehicle's surroundings and communicate the collected information to the land vehicle (2), the system comprising;
• a land vehicle (2);
• an unmanned aerial vehicle (1) according to any of the claims 1-7; and
• a tow wire (3) configured to tow the unmanned aerial vehicle (1) by the land vehicle (2) comprising a first end attached to the unmanned aerial vehicle (1) and a second end attached to the land vehicle (2).

9. A method for operating an unmanned aerial vehicle (1) relative to a land vehicle (2) using a tow wire (3) connecting the unmanned aerial vehicle (1) with the land vehicle (2), wherein an operational mode of the unmanned aerial vehicle (1) is determined based a head-wind speed onto the unmanned aerial vehicle (1) and the unmanned aerial vehicle (1) is operated autonomous based on the position of the unmanned aerial vehicle (1) relative to the land vehicle (2) and the unmanned aerial vehicle (1) is operated to continuously be positioned inside of a three dimensional space at a predefined position in relation to the unmanned aerial vehicle (1) for maintaining the position of the unmanned aerial vehicle (1) relative to the land vehicle (2), and :
- (S1) in a determination that the head-wind speed onto the unmanned aerial vehicle (1) is below a first predefined threshold head-wind speed value, determining that the operational mode of the unmanned aerial vehicle (1) is to be set to operate in a self-propelled mode and operating the unmanned aerial vehicle (1) in the self-propelled mode when the land vehicle (2) is stationary or moving with a speed below a threshold speed;
- (S2) in a determination that the head-wind speed onto the unmanned aerial vehicle (1) is above a second predefined threshold head-wind speed value, determining that the operational mode of the unmanned aerial vehicle (1) is to be set to operate in a towed mode and operating the unmanned aerial vehicle (1) in the towed mode, wherein the unmanned aerial vehicle (1) in towed mode in which the unmanned aerial vehicle (1) is towed by the land vehicle (2), when the land vehicle (2) is moving with a speed above the threshold speed;
- (S3) determining, based on an obstacle position information, that the unmanned aerial vehicle (1) and/or a tow wire (3) is on a collision course with a detected obstacle at a predefined distance ahead of the unmanned aerial vehicle (1) with the current position of the unmanned aerial vehicle (1); and
- (S4) controlling the unmanned aerial vehicle (1) to maneuver to a different position other than the current position in order to avoid a collision with the detected obstacle.

10. A computer program product (500) comprising a non-transitory computer readable medium, having thereon a computer program comprising program instructions, the computer program being loadable into a processing circuitry (101) and configured to cause execution of the method according to claim 9 when the computer program is run by the at least one processing circuitry (101).

## Patentansprüche

1. Unbemanntes Luftfahrzeug (1), das dazu konfiguriert ist, relativ zu einem Landfahrzeug (2) betrieben zu werden, indem ein Schleppseil (3) verwendet wird, welches das unbemannte Luftfahrzeug (1) mit dem Landfahrzeug (2) verbindet, wobei das unbemannte Luftfahrzeug (1) Folgendes umfasst:
• einen Sensor (10), der dazu konfiguriert ist, eine Gegenwindgeschwindigkeit auf das unbemannte Luftfahrzeug (1) zu bestimmen; und
• eine Verarbeitungsschaltung (101), die mit dem Sensor (10) verbunden ist, und:
- bei einer Bestimmung, durch die Verarbeitungsschaltung (101), dass die Gegenwindgeschwindigkeit auf das unbemannte Luftfahrzeug (1) unter einem ersten vorbestimmten Gegenwindgeschwindigkeits-Schwellenwert liegt, bestimmt wird, dass der Betriebsmodus des unbemannten Luftfahrzeugs (1) auf Betreiben in einem selbstfahrenden Modus einzustellen ist, und Betreiben des unbemannten Luftfahrzeugs (1) im selbstfahrenden Modus, wobei das unbemannte Luftfahrzeug (1) im selbstfahrenden Modus von mindestens einem ersten Motor (20a, 20b) angetrieben wird, wenn das Landfahrzeug (2) steht oder sich mit einer Geschwindigkeit unterhalb einer Schwellengeschwindigkeit bewegt;
- bei einer Bestimmung, durch die Verarbeitungsschaltung (101), dass die Gegenwindgeschwindigkeit auf das unbemannte Luftfahrzeug (1) über einem zweiten vorbestimmten Gegenwindgeschwindigkeits-Schwellenwert liegt, bestimmt wird, dass der Betriebsmodus des unbemannten Luftfahrzeugs (1) auf Betreiben in einem geschleppten Modus einzustellen ist, und Betreiben des unbemannten Luftfahrzeugs (1) im geschleppten Modus, in dem das unbemannte Luftfahrzeug (1) vom Landfahrzeug (2) geschleppt wird, wenn sich das Landfahrzeug (2) mit einer Geschwindigkeit oberhalb der Schwellengeschwindigkeit bewegt;
wobei das unbemannte Luftfahrzeug (1) autonom betrieben wird, basierend auf der Position des unbemannten Luftfahrzeugs (1) relativ zum Landfahrzeug (2), und das unbemannte Luftfahrzeug (1) betrieben wird, um kontinuierlich innerhalb eines dreidimensionalen Raums an einer vorbestimmten Position in Bezug auf das unbemannte Luftfahrzeug 1 positioniert zu werden, um die Position des unbemannten Luftfahrzeugs (1) relativ zum Landfahrzeug (2) aufrechtzuerhalten, und wobei die Verarbeitungsschaltung (101) ferner dazu konfiguriert ist, das unbemannte Luftfahrzeug (1) zu Folgendem zu veranlassen:
- Bestimmen, basierend auf einer Hindernispositionsinformation, dass sich das unbemannte Luftfahrzeug (1) und/oder das Schleppseil (3) auf Kollisionskurs mit einem erkannten Hindernis in einem vorbestimmten Abstand vor dem unbemannten Luftfahrzeug (1) bei der aktuellen Position des unbemannten Luftfahrzeugs (1) befindet; und
- Steuern des unbemannten Luftfahrzeugs (1), um an eine andere Position als die aktuelle Position zu manövrieren, um eine Kollision mit dem erkannten Hindernis zu vermeiden.

2. Unbemanntes Luftfahrzeug (1) nach Anspruch 1, wobei das unbemannte Luftfahrzeug (1) im geschleppten Modus durch Windströme angetrieben wird, die durch das Schleppen des unbemannten Luftfahrzeugs (1) unter Verwendung eines Schleppseils (3), welches das unbemannte Luftfahrzeug (1) mit dem Landfahrzeug (2) verbindet, verursacht werden, und wobei das unbemannte Luftfahrzeug (1) im selbstfahrenden Modus durch mindestens einen ersten Motor (20a, 20b) angetrieben wird.

3. Unbemanntes Luftfahrzeug (1) nach einem der vorhergehenden Ansprüche, wobei eine Klappe (11), ein Flügel (12) oder ein Ruder (13) verwendet wird, um das unbemannte Luftfahrzeug (1) im geschleppten Modus fliegend in der Luft zu halten.

4. Unbemanntes Luftfahrzeug (1) nach einem der vorhergehenden Ansprüche, wobei mindestens ein erster Motor (20a, 20b) verwendet wird, um das unbemannte Luftfahrzeug (1) im selbstfahrenden Modus fliegend in der Luft zu halten.

5. Unbemanntes Luftfahrzeug (1) nach einem der vorhergehenden Ansprüche, wobei das unbemannte Luftfahrzeug (1) ferner einen beweglichen Ankerpunkt (4) am unbemannten Luftfahrzeug (1) umfasst, der dazu angeordnet ist, ein Schleppseil (3) am unbemannten Luftfahrzeug (1) anzubringen, und der dazu konfiguriert ist, den Mittelpunkt einer Schleppkraft auf das unbemannte Luftfahrzeug (1), die durch das Schleppseil (3) verursacht wird, wenn es über den Ankerpunkt (4) am unbemannten Luftfahrzeug (1) befestigt ist, durch Bewegung des beweglichen Ankerpunktes (4) zu verändern.

6. Unbemanntes Luftfahrzeug (1) nach einem der vorhergehenden Ansprüche, wobei das unbemannte Luftfahrzeug (1) ferner ein bewegliches Ballastgewicht (5) umfasst, das im Inneren des unbemannten Luftfahrzeugs (1) angeordnet ist und dazu konfiguriert ist, den Schwerpunkt des unbemannten Luftfahrzeugs (1) durch Bewegung des beweglichen Ballastgewichts (5) zu verändern.

7. Unbemanntes Luftfahrzeug (1) nach Anspruch 1, wobei die Hindernispositionsinformation des erkannten Hindernisses durch mindestens eines von Folgenden bestimmt wird: einen Kamerasensor (21), der am unbemannten Luftfahrzeug (1) angeordnet ist, und/oder einen Kamerasensor, der mit dem unbemannten Luftfahrzeug (1) wirkverbunden ist; eine Hindernispositionsinformation, die von einem Speicher erhalten wird; einen Radarsensor, der am unbemannten Luftfahrzeug (1) angeordnet ist, und/oder einen Radarsensor, der mit dem unbemannten Luftfahrzeug (1) wirkverbunden ist; und einen Sonarsensor, der am unbemannten Luftfahrzeug (1) angeordnet ist, und/oder einen Sonarsensor, der mit dem unbemannten Luftfahrzeug (1) wirkverbunden ist.

8. System zum Steuern eines unbemannten Luftfahrzeugs (1), das relativ zu einem Landfahrzeug (2) zur Fortbewegung auf dem Land zu betreiben ist, wobei das unbemannte Luftfahrzeug (1) dazu angepasst ist, Informationen über die Umgebung des Landfahrzeugs zu sammeln und die gesammelten Informationen an das Landfahrzeug (2) zu kommunizieren, wobei das System Folgendes umfasst:
• ein Landfahrzeug (2);
• ein unbemanntes Luftfahrzeug (1) nach einem der Ansprüche 1-7; und
• ein Schleppseil (3), das dazu konfiguriert ist, das unbemannte Luftfahrzeug (1) durch das Landfahrzeug (2) zu ziehen, umfassend ein erstes Ende, das am unbemannten Luftfahrzeug (1) befestigt ist, und ein zweites Ende, das am Landfahrzeug (2) befestigt ist.

9. Verfahren zum Betreiben eines unbemannten Luftfahrzeugs (1) relativ zu einem Landfahrzeug (2) unter Verwendung eines Schleppseils (3), welches das unbemannte Luftfahrzeug (1) mit dem Landfahrzeug (2) verbindet, wobei ein Betriebsmodus des unbemannten Luftfahrzeugs (1) Gegenwindgeschwindigkeit auf einer Gegenwindgeschwindigkeit auf das unbemannte Luftfahrzeug (1) bestimmt wird und das unbemannte Luftfahrzeug (1) autonom betrieben wird, basierend auf der Position des unbemannten Luftfahrzeugs (1) relativ zum Landfahrzeug (2), und das unbemannte Luftfahrzeug (1) betrieben wird, um kontinuierlich innerhalb eines dreidimensionalen Raums an einer vorbestimmten Position in Bezug auf das unbemannte Luftfahrzeug (1) positioniert zu werden, um die Position des unbemannten Luftfahrzeugs (1) relativ zum Landfahrzeug (2) aufrechtzuerhalten, und:
- (S1) bei einer Bestimmung, dass die Gegenwindgeschwindigkeit auf das unbemannte Luftfahrzeug (1) unter einem ersten vorbestimmten Gegenwindgeschwindigkeits-Schwellenwert liegt, Bestimmen, dass der Betriebsmodus des unbemannten Luftfahrzeugs (1) auf Betreiben in einem selbstfahrenden Modus einzustellen ist, und Betreiben des unbemannten Luftfahrzeugs (1) im selbstfahrenden Modus, wenn das Landfahrzeug (2) steht oder sich mit einer Geschwindigkeit unterhalb einer Schwellengeschwindigkeit bewegt;
- (S2) bei einer Bestimmung, dass die Gegenwindgeschwindigkeit auf das unbemannte Luftfahrzeug (1) über einem zweiten vorbestimmten Gegenwindgeschwindigkeits-Schwellenwert liegt, Bestimmen, dass der Betriebsmodus des unbemannten Luftfahrzeugs (1) auf Betreiben in einem geschleppten Modus einzustellen ist, und Betreiben des unbemannten Luftfahrzeugs (1) im geschleppten Modus, wobei sich das unbemannte Luftfahrzeug (1) im geschleppten Modus befindet, in dem das unbemannte Luftfahrzeug (1) vom Landfahrzeug (2) geschleppt wird, wenn sich das Landfahrzeug (2) mit einer Geschwindigkeit oberhalb der Schwellengeschwindigkeit bewegt;
- (S3) Bestimmen, basierend auf einer Hindernispositionsinformation, dass sich das unbemannte Luftfahrzeug (1) und/oder ein Schleppseil (3) auf Kollisionskurs mit einem erkannten Hindernis in einem vorbestimmten Abstand vor dem unbemannten Luftfahrzeug (1) bei der aktuellen Position des unbemannten Luftfahrzeugs (1) befindet; und
- (S4) Steuern des unbemannten Luftfahrzeugs (1), um an eine andere Position als die aktuelle Position zu manövrieren, um eine Kollision mit dem erkannten Hindernis zu vermeiden.

10. Computerprogrammprodukt (500), umfassend ein nichtflüchtiges computerlesbares Medium, auf dem sich ein Computerprogramm befindet, das Programmanweisungen umfasst, wobei das Computerprogramm in eine Verarbeitungsschaltung (101) ladbar ist und dazu konfiguriert ist, die Durchführung des Verfahrens nach Anspruch 9 zu bewirken, wenn das Computerprogramm von der mindestens einen Verarbeitungsschaltung (101) ausgeführt wird.

## Revendications

1. Véhicule aérien sans pilote (1) configuré pour être utilisé par rapport à un véhicule terrestre (2) à l'aide d'un câble de remorquage (3) reliant le véhicule aérien sans pilote (1) au véhicule terrestre (2), le véhicule aérien sans pilote (1) comprenant :
• un capteur (10) configuré pour déterminer une vitesse de vent de face sur le véhicule aérien sans pilote (1) ; et
• un circuit de traitement (101) connecté au capteur (10) et :
- lors d'une détermination par le circuit de traitement (101) selon laquelle la vitesse du vent de face sur le véhicule aérien sans pilote (1) est inférieure à une première valeur seuil prédéfinie de vitesse du vent de face, il est déterminé que le mode d'utilisation du véhicule aérien sans pilote (1) doit être réglé pour fonctionner dans un mode automoteur, et utiliser le véhicule aérien sans pilote (1) dans le mode automoteur, dans lequel le véhicule aérien sans pilote (1) en mode automoteur est propulsé par au moins un premier moteur (20a, 20b) lorsque le véhicule terrestre (2) est à l'arrêt ou se déplace à une vitesse inférieure à une vitesse seuil ;
- lors d'une détermination par le circuit de traitement (101) selon laquelle la vitesse du vent de face sur le véhicule aérien sans pilote (1) est supérieure à une seconde valeur seuil prédéfinie de vitesse du vent de face, il est déterminé que le mode d'utilisation du véhicule aérien sans pilote (1) doit être réglé pour fonctionner dans un mode remorqué, et utiliser le véhicule aérien sans pilote (1) dans le mode remorqué dans lequel le véhicule aérien sans pilote (1) est remorqué par le véhicule terrestre (2), lorsque le véhicule terrestre (2) se déplace à une vitesse supérieure à la vitesse seuil ;
dans lequel le véhicule aérien sans pilote (1) est utilisé de manière autonome sur la base de la position du véhicule aérien sans pilote (1) par rapport au véhicule terrestre (2) et le véhicule aérien sans pilote (1) est utilisé pour être positionné en continu à l'intérieur d'un espace tridimensionnel à une position prédéfinie par rapport au véhicule aérien sans pilote 1 pour maintenir la position du véhicule aérien sans pilote (1) par rapport au véhicule terrestre (2), et dans lequel le circuit de traitement (101) est en outre configuré pour amener le véhicule aérien sans pilote (1) à :
- déterminer, sur la base d'informations de position d'obstacle, que le véhicule aérien sans pilote (1) et/ou le câble de remorquage (3) se trouve (nt) sur une trajectoire de collision avec un obstacle détecté à une distance prédéfinie devant le véhicule aérien sans pilote (1) avec la position actuelle du véhicule aérien sans pilote (1) ; et
- commander au véhicule aérien sans pilote (1) de manoeuvrer vers une position différente autre que la position actuelle afin d'éviter une collision avec l'obstacle détecté.

2. Véhicule aérien sans pilote (1) selon la revendication 1, dans lequel le véhicule aérien sans pilote (1) en mode remorqué est propulsé par des courants de vent provoqués par le remorquage du véhicule aérien sans pilote (1) à l'aide d'un câble de remorquage (3) reliant le véhicule aérien sans pilote (1) avec le véhicule terrestre (2), et dans lequel le véhicule aérien sans pilote (1) en mode automoteur est propulsé par au moins un premier moteur (20a, 20b).

3. Véhicule aérien sans pilote (1) selon l'une quelconque des revendications précédentes, dans lequel un volet (11), une aile (12) ou un gouvernail (13) est utilisé pour maintenir le véhicule aérien sans pilote (1) en vol dans les airs en mode remorqué.

4. Véhicule aérien sans pilote (1) selon l'une quelconque des revendications précédentes, dans lequel au moins un premier moteur (20a, 20b) est utilisé pour maintenir le véhicule aérien sans pilote (1) en vol dans les airs en mode automoteur.

5. Véhicule aérien sans pilote (1) selon l'une quelconque des revendications précédentes, dans lequel le véhicule aérien sans pilote (1) comprend en outre un point d'ancrage mobile (4) au niveau du véhicule aérien sans pilote (1) agencé pour attacher un câble de remorquage (3) au véhicule aérien sans pilote (1), et conçu pour modifier le centre d'une force de remorquage sur le véhicule aérien sans pilote (1) provoquée par le fil de remorquage (3) lorsqu'il est fixé au véhicule aérien sans pilote (1) par l'intermédiaire du point d'ancrage (4), par déplacement du point d'ancrage mobile (4).

6. Véhicule aérien sans pilote (1) selon l'une quelconque des revendications précédentes, dans lequel le véhicule aérien sans pilote (1) comprend en outre un poids de ballast mobile (5) disposé à l'intérieur du véhicule aérien sans pilote (1) conçu pour changer le centre de gravité du véhicule aérien sans pilote (1) par mouvement du poids de ballast mobile (5).

7. Véhicule aérien sans pilote (1) selon la revendication 1, dans lequel les informations de position d'obstacle de l'obstacle détecté sont déterminées par au moins l'un : d'un capteur de caméra (21) disposé au niveau du véhicule aérien sans pilote (1) et/ou d'un capteur de caméra connecté de manière opérationnelle au véhicule aérien sans pilote (1) ; d'informations de position d'obstacle obtenues à partir d'une mémoire ; d'un capteur radar disposé au niveau du véhicule aérien sans pilote (1) et/ou d'un capteur radar connecté de manière opérationnelle au véhicule aérien sans pilote (1) ; et d'un capteur sonar disposé au niveau du véhicule aérien sans pilote (1) et/ou d'un capteur sonar connecté de manière opérationnelle au véhicule aérien sans pilote (1).

8. Système de commande d'un véhicule aérien sans pilote (1) destiné à être utilisé par rapport à un véhicule terrestre (2) pour une locomotion terrestre, dans lequel le véhicule aérien sans pilote (1) est adapté pour collecter des informations sur l'environnement du véhicule terrestre et communiquer les informations collectées au véhicule terrestre (2), le système comprenant :
• un véhicule terrestre (2) ;
• un véhicule aérien sans pilote (1) selon l'une quelconque des revendications 1 à 7 ; et
• un câble de remorquage (3) configuré pour remorquer le véhicule aérien sans pilote (1) par le véhicule terrestre (2) comprenant une première extrémité fixée au véhicule aérien sans pilote (1) et une seconde extrémité fixée au véhicule terrestre (2) .

9. Procédé d'utilisation d'un véhicule aérien sans pilote (1) par rapport à un véhicule terrestre (2) à l'aide d'un câble de remorquage (3) reliant le véhicule aérien sans pilote (1) au véhicule terrestre (2), dans lequel un mode opérationnel du véhicule aérien sans pilote (1) est déterminé sur la base d'une vitesse de vent de face sur le véhicule aérien sans pilote (1) et le véhicule aérien sans pilote (1) est utilisé de manière autonome sur la base de la position du véhicule aérien sans pilote (1) par rapport au véhicule terrestre (2) et le véhicule aérien sans pilote (1) est utilisé pour être positionné en continu à l'intérieur d'un espace tridimensionnel à une position prédéfinie par rapport au véhicule aérien sans pilote (1) pour maintenir la position du véhicule aérien sans pilote (1) par rapport au véhicule terrestre (2), et :
- (51) dans une détermination selon laquelle la vitesse du vent de face sur le véhicule aérien sans pilote (1) est inférieure à une première valeur seuil prédéfinie de vitesse de vent de face, déterminer que le mode opérationnel du véhicule aérien sans pilote (1) doit être réglé pour fonctionner dans un mode automoteur et utiliser le véhicule aérien sans pilote (1) en mode automoteur lorsque le véhicule terrestre (2) est à l'arrêt ou se déplace à une vitesse inférieure à une vitesse seuil ;
- (S2) dans une détermination selon laquelle la vitesse du vent de face sur le véhicule aérien sans pilote (1) est supérieure à une seconde valeur seuil prédéfinie de vitesse de vent de face, déterminer que le mode opérationnel du véhicule aérien sans pilote (1) doit être réglé pour fonctionner dans un mode remorqué et utiliser le véhicule aérien sans pilote (1) en mode remorqué, dans lequel le véhicule aérien sans pilote (1) en mode remorqué dans lequel le véhicule aérien sans pilote (1) est remorqué par le véhicule terrestre (2), lorsque le véhicule terrestre (2) se déplace à une vitesse supérieure à la vitesse seuil ;
- (S3) déterminer, sur la base d'informations de position d'obstacle, que le véhicule aérien sans pilote (1) et/ou un câble de remorquage (3) se trouvent sur une trajectoire de collision avec un obstacle détecté à une distance prédéfinie devant le véhicule aérien sans pilote (1) avec la position actuelle du véhicule aérien sans pilote (1) ; et
- (S4) commander au véhicule aérien sans pilote (1) de manoeuvrer vers une position différente autre que la position actuelle afin d'éviter une collision avec l'obstacle détecté.

10. Produit de programme informatique (500) comprenant un support lisible par ordinateur non transitoire, sur lequel se trouve un programme informatique comprenant des instructions de programme, le programme informatique pouvant être chargé dans un circuit de traitement (101) et configuré pour provoquer l'exécution du procédé selon la revendication 9 lorsque le programme informatique est exécuté par l'au moins un circuit de traitement (101).
